# EUROPÄISCHE PATENTSCHRIFT

(11) **EP 1 774 473 B1**
(45) Veröffentlichungstag und Bekanntmachung des Hinweises auf die Patenterteilung: **11.05.2011**
(21) Anmeldenummer: 05777792.2
(22) Anmeldetag: 05.08.2005
(51) Int. Cl.: A61C 19/045

(54) **VERFAHREN ZUR POSITIONSBESTIMMUNG UND POSITIONSMESSSYSTEM**
POSITION DETERMINATION METHOD AND POSITION MEASURING SYSTEM
PROCEDE DE DETERMINATION DE POSITION ET SYSTEMES DE MESURE DE POSITION

(30) Priorität: 06.08.2004 DE 102004038545
(43) Veröffentlichungstag der Anmeldung: 18.04.2007
(73) Patentinhaber: Peters, Heiko, 53225 Bonn (DE)
(72) Erfinder: Peters, Heiko, 53225 Bonn (DE)
(74) Vertreter: Borkowski, Jens
(86) Internationale Anmeldenummer: PCT/EP2005/008505
(87) Internationale Veröffentlichungsnummer: WO 2006/015809

(56) Entgegenhaltungen:
- WO-A-02/31772
- WO-A-02/102270
- DE-A1- 4 411 907
- US-A- 4 859 181
- US-A- 6 152 731
- US-A1- 2001 039 421
- US-A1- 2004 104 935
- US-B1- 6 724 930
- VOGT S ET AL: "Single camera tracking of marker clusters: multiparameter cluster optimization and experimental verification" MIXED AND AUGMENTED REALITY, 2002. ISMAR 2002. PROCEEDINGS. INTERNATIONAL SYMPOSIUM ON SEPT. 30 - OCT. 1, 2002, PISCATAWAY, NJ, USA,IEEE, 30. September 2002 (2002-09-30), Seiten 127-136, XP010620949 ISBN: 0-7695-1781-1

## Beschreibung

Die Erfindung betrifft ein Verfahren zur Positionsbestimmung der kondylen des Unterkiefers einer Person sowie ein Positionsmeßsystem. Es kann so eine Positionsbestimmung im zwei- oder auch dreidimensionalen Raum über die optische Erfassung mittels einer elektronischen Kamera und Auswertung der Bilder über ein entsprechendes Bilderkennungsprogramm durch einen Computer vorgenommen werden.

Es können Positionsbestimmungen von statischen oder bewegten Gegenständen in Echtzeit oder aus aufgezeichneten Bildern vorgenommen werden.

### Stand der Technik

Bislang werden zur Positionsbestimmung und Positionierung in vielen Bereichen der Technik und Medizin technisch aufwendige und kostenintensive Verfahren eingesetzt.

Beispiele für die bisher eingesetzten Navigations- und Positionsmeßsysteme im zwei- oder dreidimensionalen Raum sind die Satellitennavigation, Abstandsmessung über Ultraschallsender und -empfänger, Abstandsmessung über Lichtsender und - empfänger (Infrarot, Laser, etc.), Optische Erfassung über stereooptische Systeme mit zwei oder mehr Kameras, Mechanische oder elektromechanische Aufzeichnung von Bewegungen, Mechanische Vermessung statischer Positionen über mechanische Hilfsmittel und mechanische Vermessungsgeräte.

Die Navigation und Positionsbestimmung wird zum gegenwärtigen Stand der Technik unter anderem in folgenden Bereichen eingesetzt: Positionsbestimmung von Fahrzeugen und anderen Gegenständen auf und unter der Erdoberfläche, Einparkhilfen von Fahrzeugen, Erstellung der Bohrungen im Knochen bei der Implantation von Zahnimplantaten, Endoprothesen (beispielsweise Hüftgelenksersatz) unter Kontrolle eines Positionierungssystems, Instrumentelle Funktionsanalyse des Kausystems (Registrierung und Vermessung der Kiefergelenksbewegungen, gelenkbezügliche Positionsbestimmung der Kiefer, Montage der Kiefermodelle bei der Herstellung von Zahnersatz im Kausimulator, dem sogenannten Artikulator, Diagnose von pathologischen Veränderungen des stomatognathen Systems, kraniomandibulären Dysfunktionen CMD).

Für die letztgenannte zahnmedizinische Anwendung gibt es derzeit im wesentlichen vier Verfahren, die Kenntnisse bezüglich der Kondylenachslokalisation und der Gelenkbewegungen ermöglichen. Diese sind die Mechanische Registrierung durch Anlegen eines Gesichtsbogens unter Zuhilfenahme anatomischer Referenzpunkte, die mechanische Registrierung durch Anlegen eines Gesichtsbogens unter Zuhilfenahme anatomischer Referenzpunkte und Aufzeichnung der Gelenkbewegungen mit Schreibstiften auf Schreibplatten, die am Gesichtsbogen in Gelenknähe montiert sind. Die Schreibstifte werden durch eine am Unterkiefer befestigte Mechanik geführt. Weiterhin sind dies die Elektromechanische Registrierung durch Anlegen eines Gesichtsbogens unter Zuhilfenahme anatomischer Referenzpunkte und Aufzeichnung der Gelenkbewegungen durch elektromechanische Übertragung mit einer am Unterkiefer befestigten Mechanik und die elektronische Registrierung durch Ultraschallsensoren. Die stationären Empfangssensoren werden nicht an anatomischen Merkmalen orientiert willkürlich am Kopf befestigt oder mit einem den üblichen Gesichtsbögen ähnlichen Gesichtsbogen an anatomischen Merkmalen orientiert befestigt. Die die Bewegung vermittelnden Ultraschallsender werden mechanisch am Unterkiefer befestigt (DE 10218435).

Ein Verfahren zur optischen Positionsbestimmung der kondylenachsen ist bekannt aus DE 44 11 907.

Zur Montage der Kiefermodelle im Artikulator sind derzeit folgende Verfahren bekannt, wobei alle bekannten Verfahren auf einer rein mechanischen Übertragung der vermessenen Kieferrelation in den Artikulator basieren: 1. Das Anlegen des Gesichtsbogens an den entsprechenden Bezugspunkten des Artikulators und Befestigung des Kiefermodells im Artikulator mit Gips durch Reponieren des Modells in die Impressionen eines plastischen Registriermaterials, mit dem eine Bißgabel versehenen ist, oder durch Reponieren des Modells in eine Schablone, die mit dem Kiefer kongruent ist. Diese Bißgabel oder die Schablone ist am Gesichtsbogen, der am Artikulator angelegt ist, während der Modellmontage im Artikulator genau identisch montiert, wie zum Zeitpunkt der Registrierung am Patienten. 2. Anstelle des vorgenannten Gesichtsbogens wird zur Modellmontage ein Hilfsmittel verwendet, daß maßgleich mit dem Gesichtsbogen ist. An diesem Hilfsmittel wird zur Modellmontage die während der Registrierung am Patienten verwendete Bißgabel oder Schablone montiert. Das Kiefermodell wird mit Gips in diesem Artikulator befestigt. 3. Willkürliche Montage der Kiefermodelle im Artikulator ohne Vermessung. 4. Montage der Kiefermodelle in spezifische Artikulatoren, die zu Systemen gehören, die nicht in der Lage sind, die Kondylenpositionen zu bestimmen oder zu übertragen.

### Problem

In der Zahnmedizin werden Navigationssysteme, beziehungsweise räumliche Vermessungssysteme, eingesetzt. Zur instrumentellen Funktionsanalyse und Registrierung bei prothetischen Behandlungen oder bei funktionellen Erkrankungen des stomatognathen Systems sind Vermessungen der Kiefergelenksposition und Kiefergelenksbewegungen von Bedeutung.

Die Kenntnis der genauen Lokalisation der Kondylen und der Gelenkbewegungen des Patienten ist zur Herstellung eines Zahnersatzes im Labor unter Zuhilfenahme eines Kausimulators mit möglichst geringen Korrekturen am Patienten und einwandfreier Funktion unerläßlich.

Gegenstand der vorliegenden Ausführung der genannten Erfindung ist in einer zahnmedizinischen Anwendung ein System zur instrumentellen Funktionsanalyse, Registrierung, Modellmontage im Artikulator, Kondylenbahnvermessung und Kondylenachsenpositionsbestimmung, das gegenüber den bekannten Systemen erhebliche Vorteile aufweist.

### Ausgestaltung der Erfindung

Diese Aufgabe wird durch die Merkmale der Ansprüche 1 und 12 gelöst. Vorteilhafte Weiterbildungen der Erfindung werden in den Unteransprüchen genannt.

Als Bezugssystem bzw. Referenzposition für die Positionsbestimmung eines Gegenstandes kann z.B. die Kameraposition dienen oder aber auch unabhängig von einer frei wählbaren willkürlichen Kameraposition einer der über die Kamera erfassten Gegenstände oder eine bestimmte Referenzposition, die z.B. ebenso wie ein zu erfassender Gegenstand durch wenigstens eine Hilfsstruktur gekennzeichnet und von einer Kamera aufgenommen wird.

Die aus der Bildverarbeitung gewonnenen Ergebnisse können zur genauen Positionsbestimmung oder zur Positionierung eines anderen oder eines der gemessenen Gegenstände genutzt werden. Es können bei der Erfassung von Bewegungen die genauen Bewegungsabläufe insbesondere hinsichtlich der jeweils eingenommenen Koordinaten, bei Bedarf auch in genauem zeitlichen Zusammenhang, bestimmt werden.

Die Positionsbestimmung des zu vermessenden Objektes geschieht durch optische Erfassung mit einer elektronischen Kamera und Weiterverarbeitung dieser Daten, insbesondere mit der erfindungsgemäßen Software. Diese erfindungsgemäße Software ermöglicht die Bestimmung der dreidimensionalen Raummaße dieses Objektes, die die Lage des Objektes im Raum beschreiben.

Das erfindungsgemäße System kommt mit nur einer einzigen Kamera aus. Zur Erzielung einer Redundanz kann es bei bestimmten Anwendungsfällen dennoch sinnvoll sein, mit mehr als einer Kamera zu arbeiten.

Je nach Leistungsfähigkeit einer Bildanalysesoftware, des verwendeten Computers oder Einfachheit der optischen Strukturen kann der zu vermessende Gegenstand selbst erfasst werden oder es kann bevorzugt wenigstens eine optische Hilfsstruktur verwendet werden, die an die zu vermessenden Gegenstände angebracht wird. Insbesondere bei einfach geformten Körpern mit bekannten Maßen, wie beispielsweise Quadern, oder bei geringen Erfordernissen an die Meßgenauigkeit, kann auf die Anbringung von optischen Hilfsstrukturen verzichtet werden. In allen anderen Fällen erleichtern diese optischen Hilfsstrukturen die optische Erkennung durch das erfindungsgemäße Computerprogramm. Alternativ kann bei Anordnung einer Kamera auf dem Gegenstand auch die mit wenigstens einer optischen Hilfsstruktur ausgestattete Umgebung aufgenommen werden, um aus den Bildern die Position des Gegenstandes in der Umgebung zu bestimmen.

Derartige Hilfsstrukturen können farbige Flächen oder Körper oder Reflexionsflächen oder Reflexionskörper mit bekannten Maßen sein. Insbesondere bei der dreidimensionalen Vermessung sind Kugeln zur Vermeidung eines Projektionsfehlers sinnvoll. Die Kamera erfaßt unabhängig von der Kameraposition von Kugeln immer ein unverzerrtes kreisförmiges Abbild. Dadurch werden Meßfehler minimiert, der Rechenaufwand verringert und die Berechnung schneller. Bei der Bilderfassung einer Kreisfläche können je nach Betrachtungswinkel ein ovales und zu kleines Projektionsbild resultieren mit den dann möglichen Meßfehlern. Dies gilt analog auch für alle anderen Flächen- und Körperformen. Diese Meßfehler können jedoch durch geeignete rechnerische Maßnahmen vermieden werden. Hierzu ist jedoch unter Umständen die Verwendung von mehr als einer optischen Hilfsstruktur sinnvoll.

Im Gegensatz zu allen anderen Körpern bilden Kugeln in der zweidimensionalen Abbildung immer ein identisches Bild unabhängig vom Betrachtungsstandpunkt, das sich lediglich in der Größe unterscheidet. Dies ist immer eine Kreisfläche. Alle anderen Körper bilden in der zweidimensionalen Abbildung eine vom Betrachtungsstandpunkt abhängige Flächenform. Daher eignen sich Kugeln als optische Hilfsstrukturen besonders gut.

Es können Hilfsstrukturen in jeder beliebigen Zahl verwendet werden. Ob überhaupt und wie viele Hilfsstrukturen verwendet werden, hängt vom jeweiligen Einsatzzweck ab.

Für die genaue dreidimensionale Positionsbestimmung eines optisch komplexen Gegenstandes ist die Anbringung von mehreren, z.B. drei oder vier Hilfsstrukturen, vornehmlich Kugeln, sinnvoll. Diese optischen Hilfsstrukturen bilden eine Gruppe, die einem bestimmten Punkt an einem Gegenstand zugeordnet ist. So müssen nicht zwingend aus einer Kameraperspektive alle optischen Hilfsstrukturen einer Gruppe erkennbar sein, um eine Positionsbestimmung durchführen zu können. Gleiches kann für Referenzpositionen oder andere Gegenstände gelten, die mit optischen Hilfsstrukturen optisch erfaßbar gemacht werden sollen. Mehrere Hilfsstrukturen ermöglichen somit eine Redundanz. Wenn alles oder Teile einer Struktur verdeckt sein sollten, ermöglicht eine überschüssige Zahl derartiger optischer Hilfsstrukturen dennoch die Erfassung genügend verwertbarer Daten.

Die zu einem zu vermessenden Objekt gehörigen Hilfsstrukturen werden so angebracht, daß die genaue Position der Hilfsstrukturen zueinander bekannt ist, möglichst alle Hilfsstrukturen zuverlässig von der Kamera erfaßt werden und bevorzugt die Strukturen zumindest in zwei Dimensionen des Raumes gleichmäßig verteilt sind.

Da insbesondere die Tiefenmessung über ein einäugiges optisches System den größten Rechenaufwand bedeutet und mit der größten Fehlermöglichkeit verbunden ist, ist es sinnvoll, daß die Hilfsstrukturen insbesondere zur optischen Achse ausgerichtet werden.

Beispielsweise könnten vier Hilfsstrukturen auf einer zur optischen Achse annähernd parallelen Fläche trapezförmig angeordnet werden, so daß die hinteren beiden Strukturen weiter auseinander liegen, als die vorderen. Drei Strukturen könnten auf einer dreiecksförmigen Fläche mit stumpfen Winkeln angeordnet werden.

Das System funktioniert auch mit nur einer einzigen Struktur, jedoch stehen dann wesentlich weniger Informationen zur genauen Berechnung zur Verfügung.

Je mehr Hilfsstrukturen vorhanden sind, desto mehr Informationen stehen für eine dann immer genauere Berechnung zur Verfügung, jedoch steigt der Rechenaufwand dann auch erheblich an.

Ebenso ist der Rechenaufwand bei der Bilderfassung eines Gegenstandes oder dessen Umgebung ganz ohne Hilfsstruktur wesentlich größer, als bei der Verwendung von Hilfsstrukturen, aber auch möglich.

Die Auswahl der Farbe der Hilfsstrukturen richtet sich nach den Farben der anderen von der Kamera erfaßten Gegenstände. Beste Genauigkeit in der Bilderfassung wird dann erreicht, wenn die Farbe der Hilfsstrukturen möglichst unterschiedlich zu den anderen vorherrschenden Farben im Bild ist. Nicht glänzende Oberflächen sind vorzuziehen.

Zur Erzielung einer besonders zuverlässigen Bilderkennung ist es sinnvoll, die Umgebung der Hilfsstrukturen mit einem besonderen Kontrast zu umgeben. Dies kann bei der Verwendung von Flächenformen durch einen ausreichend breiten Rahmen einer besonders stark zur Flächenfarbe kontrastierenden Farbe geschehen. Kugeln oder andere Körper als Hilfsstrukturen können mit einem Hintergrund versehen werden, der farblich besonders stark zur Kugelfarbe oder Körperfarbe kontrastiert. Hierbei ist zu beachten, daß dieser Hintergrund zur Kontraststeigerung bei allen möglichen Kamerapositionen in Relation zur Hilfsstruktur den Körper möglichst nicht ganz oder teilweise verdeckt.

Des weiteren ist die erreichbare Meßgenauigkeit abhängig von der Qualität des optischen Systems, der Bildauflösung und Maßgenauigkeit der verwendeten Hilfsstrukturen oder der zu vermessenden Gegenstände, falls keine Hilfsstruktur verwendet wird.

Die mit oder ohne optische Hilfsstrukturen versehenen zu vermessenden Gegenstände oder die Umgebung davon werden von einer Kamera erfaßt. Vorzugsweise kann die Kamera auf einem Stativ befestigt werden. Die von der Kamera erfaßten Bilder werden entweder zeitlich sofort z.B. vom erfindungsgemäßen Rechenprogramm ausgewertet oder zunächst in Form von Einzelbildern oder Videoaufzeichnungen gespeichert.

Das erfindungsgemäße Rechenprogramm erkennt zunächst die Form oder Strukturen des Gegenstandes, dessen Position bestimmt werden soll oder die Konturen oder Strukturen der an diesem Gegenstand angebrachten wenigstens einen optischen Hilfsstruktur, bzw., falls die Kamera am Gegenstand angeordnet ist, die wenigstens eine optische Hilfsstruktur in der Umgebung. Z.B. werden dann nach Erkennung der Konturen oder Strukturen die zweidimensionalen Bildkoordinaten bestimmt.

Hauptsächlich hinsichtlich der genauen Tiefenermittlung bei der dreidimensionalen Vermessung einer Position bestehen bei bekannten Systemen die größten Probleme. Dennoch kommt das erfindungsgemäße Verfahren mit nur einer Kamera aus, bzw. erfolgt die Positionsbestimmung nur anhand eines Bildes bzw. mehrerer Bilder einer Kamera, ggfs. zeitlich nacheinander mit verschiedenen Kameras.

Insbesondere die Tiefenmessung, also Messung in z-Richtung, hängt stark von der Auflösung der verwendeten Kamera ab. Gegenstände, die näher an der Kamera sind, stellen sich auf dem Bild größer dar, weiter entfernte Gegenstände kleiner. So kann durch einen Vergleich der Größenrelation erkannter Hilfsstrukturen auf deren Tiefenabstand geschlossen werden. Die kleinste darstellbare Maßeinheit entspricht einem Bildpunkt des Bildaufnahmesensors der Kamera, einem Pixel. Abhängig von der Kameraauflösung, der Gegenstandsweite und der optischen Eigenschaften ist die Tiefenauflösung, also in z-Richtung, erheblich gröber, als die Auflösung in Höhe und Breite, also in x- und y-Richtung. Diese grobe Auflösung in Tiefenrichtung ist ohne die Anwendung des erfindungsgemäßen Programms für viele Meßaufgaben ungeeignet. Durch hochauflösende Kameras kann die Auflösung verfeinert werden. Das erfindungsgemäße Computerprogramm ist jedoch in der Lage, mit derart groben Rohdaten wesentlich feinere Auflösungen in allen Raumrichtungen zu ermöglichen. Die Algorithmen des erfindungsgemäßen Computerprogramms nutzen wesentlich mehr in den Bildern enthaltene Informationen, als nur die reinen Bildpunktmaße der Bilddarstellung, um zu möglichst genauen Ergebnissen zu gelangen. Durch dieses rechnerische Vorgehen ist die erreichbare Meßgenauigkeit wesentlich größer, als die Bildauflösung der Bilder nach den herkömmlichen Methoden erzielen läßt.

Die Bilderkennung kann für nur einen im Sichtfeld der Kamera befindlichen Gegenstand oder aber auch für mehrere gleichzeitig im Bildfeld der Kamera befindlichen Gegenstände erfolgen, bzw. falls die Kamera an einem Gegenstand montiert ist für eine oder mehrere Hilfsstrukturen bzw. Gruppen von Hilfsstrukturen in der aufgenommenen Umgebung des Gegenstandes. Entsprechend können die relativen Maße der Positionen der Gegenstände zueinander für weitere Anwendungen bestimmt werden oder aber auch die Maße der Positionen der im Bildfeld befindlichen Gegenstände zur Kameraposition als Bezugsgröße oder zu einer beliebigen Referenzposition.

Die prinzipielle Vorgehensweise, aus einem 2-dimensionalen Kamerabild die Position eines Gegenstandes zu ermitteln ist, in den Unteransprüchen 8 bis 10 näher beschrieben. Zur Erleichterung der Erkennung von Hilfsstrukturen kann ergänzend bei der Bildauswertung eine Farbanalyse, z.B. ein Farbhistogramm, aller Bildpunkte durchgeführt werden, um die farblich hervorstechenden Hilfsstrukturen einfacher diskriminieren zu können.

### Beispielhafte Anwendung:

In der zahnmedizinischen Anwendung kann die Erfindung z.B. zur instrumentellen Funktionsanalyse eingesetzt werden, um Daten zu ermitteln, die einerseits die patientengerechte Einstellung von Artikulatoren im zahntechnischen Labor und andererseits Entscheidungen des Benutzers bezüglich einer Diagnose und eventueller Therapie ermöglichen. Auch kann die Erstellung von Zahn(teil)ersatz erheblich vereinfacht werden.

In dieser Anwendung der Erfindung werden durch optische Erfassung von Kieferbewegungen die für die Bestimmung der Kondylenlokalisationen und Bewegungen notwendigen Daten ermittelt. Diese Daten werden durch das erfindungsgemäße Programm ausgewertet und ermöglichen die Übertragung der Ergebnisse in Form von Daten an das zahntechnische Labor. Die Kiefermodelle werden im Artikulator unter bevorzugter Anwendung einer erfindungsgemäßen Vorrichtung zur Montage der Kiefermodelle im Artikulator (hier Montagetisch genannt), die auf die durch das Programm bestimmten Werte eingestellt wird, montiert.

In dieser zahnmedizinischen Anwendung werden Kopf- und Gesichtsstrukturen des Patienten oder am Patienten hilfsweise z.B. mittels Gesichtsbögen befestigte optische Hilfsstrukturen optisch mittels einer einzigen Kamera erfasst. Diese mit einer elektronischen Kamera erfassten Bilder werden vom erfindungsgemäßen Computerprogramm ausgewertet.

Als Bezugssystem dient der Kopf selbst mit gegebenenfalls angebrachtem Gesichtsbogen mit optischen Hilfsstrukturen. Wenn während der Aufzeichnungen der Patient den Kopf bewegt oder die Kamera bewegt wird, bleibt dennoch die relative Positionsbeziehung zwischen Ober- und Unterkiefer identisch. Da das sich bewegende Bezugssystem ebenfalls optisch erfasst wird, kann die relative Position des Unterkiefers in Bezug zur Oberkieferposition herausgerechnet werden. Somit spielt es keine Rolle, ob während der Aufzeichnungen der Patient den Kopf bewegt oder die Kamera bewegt wird.

Anstelle der Gesichtsbögen ist auch der Einsatz von optischen Markierungen, die unmittelbar auf der Haut des Patienten fixiert werden, möglich. Aufgrund der Verschieblichkeit der Haut in Relation zur knöchernen Unterlage resultieren Ungenauigkeiten, die rechnerisch Berücksichtigung finden müssen.

Für andere Aufgaben in der Medizin lassen sich analog auch Bewegungen anderer Körperteile unter Zuhilfenahme dieser Erfindung vermessen.

Gemäß der Erfindung wird im Wesentlichen so vorgegangen, dass ein Patient seinen Unterkiefer in beliebiger Weise gegenüber dem Oberkiefer bewegt. Mittels der Kamera werden Bilder dieser Bewegungen aufgenommen. Die Bilder werden ausgewertet - wie zuvor beschrieben - um die Position des Unterkiefers gegenüber dem Oberkiefer in jedem einzelnen Bild zu bestimmen. Aus der Vielzahl der aufgenommenen Bilder und der so erhaltenen Einzelpositionen kann errechnet werden um welche Punkte sich der Unterkiefer gegenüber dem Oberkiefer bewegen kann. Es können also die Lagen der Kondylen festgestellt werden.

### Vorteilhafte Wirkung

Im Gegensatz zu allen anderen existierenden Positionssystemen ist die notwendige Technik außerordentlich einfach und kostengünstig herstellbar, da im Wesentlichen vorhandene Techniken aus kostengünstigen Massenproduktionen genutzt werden können. Die Erfindung verwendet im Wesentlichen eine oder mehrere elektronische Kameras, einen Computer, das erfindungsgemäße Verfahren z.B. als Programm und, falls notwendig oder sinnvoll, optische Hilfsstrukturen.

Als Kamera können alle handelsüblichen elektronischen Kameras benutzt werden: Internetkameras (Webcams), digitale Fotokameras oder Filmkameras. Es können digitale Kameras Anwendung finden, ebenso auch analoge Kameras mit anschließender Digitalisierung der Bilddaten. Als Computer kann jeder handelsübliche Computer mit ausreichender Rechenleistung verwendet werden. Ein Personalcomputer mit dem technischen Stand zum Zeitpunkt der Erfindung reicht völlig aus. Die Hilfsstrukturen sind äußerst einfach herstellbar, da diese lediglich aus farbigen Flächen, Kreisflächen oder anderen einfachen Körpern, vorzugsweise Kugeln, bestehen, die räumlich in fester und bekannter Position zueinander am zu vermessenden Gegenstand befestigt werden.

Da die erfindungsgemäßen optischen Hilfsstrukturen keine aktive Technik, wie beispielsweise Elektronik, enthalten und auch keine Stromversorgung oder Verbindungen über Kabel benötigen, ist die Einflußnahme der angebrachten Hilfsstrukturen auf das Messergebnis gering. Diese Strukturen können in Leichtbauweise hergestellt werden.

Aufgrund der enormen Schlichtheit ist diese erfindungsgemäße Positionierungstechnik nun für jede Anwendung verfügbar, in der Aufgrund der Kosten oder des technischen Aufwandes bislang ein Positionsmeßsystem trotz Vorteilhaftigkeit nicht eingesetzt wurde. Zudem ist die Genauigkeit trotz geringem technischen Aufwand besser.

Insbesondere bei der zahnmedizinischen Anwendung im Bereich der Prothetik und Funktionsanalyse ergeben sich die folgend genannten erheblichen Vorteile im Vergleich zu den bekannten Systemen: Delegierbarkeit auf kostengünstigeres Praxispersonal, Steigerung des Umsatz der Zahnarztpraxis, Verbesserung der Qualität und Verringerung der Kosten des hergestellten Zahnersatzes, weniger Korrekturen, geringerer Zeitaufwand.

In der virtuellen Bestimmbarkeit der zentrischen Kiefergelenksposition und der damit verbundenen Ersparnis eines Zentrikregistrats oder einer Stützstift-/Pfeilwinkelaufzeichnung liegt ein erheblicher Vorteil dieser erfindungsgemäßen Ausführung, da diese Arbeitsschritte entfallen können.

Es können dem zahntechnischen Labor nur Daten und die zugehörigen Übertragungshilfsmittel zugesendet werden. Diese Übertragungshilfsmittel sind mechanisch sehr einfach und kostengünstig. Neben den individuell für den jeweiligen Patientenfall herstellbaren Übertragungshilfsmitteln können die fertig konfektionierten Übertragungshilfsmittel in größerer Zahl in der Praxis kostengünstig bevorratet werden. Im Praxisalltag bedeutet dies, daß immer eine Registrierung bei Bedarf ohne vorhergehende Planung und Organisation durchgeführt werden kann. Bislang mußten teure mechanische Teile zwischen Labor und Praxis ausgetauscht werden (Gesichtsbögen, Übertragungsknebel, Pfeilwinkel-/Stützstiftsysteme etc.).

Die Registrierung ist mit diesem erfindungsgemäßen System wesentlich besser dokumentiert, als es bislang möglich war. Die Bewegungen können jederzeit später, da sie als Videoaufzeichnung vorliegen, kontrolliert werden. Bei späteren Verbesserungen des Programms können vorhandene Videoaufzeichnungen nochmals als Berechnungsgrundlage dienen. Aufgrund der umfangreichen Dokumentation können Behandlungserfolge besser beurteilt werden. Ohne invasive Maßnahmen, ohne Röntgenaufnahmen und ohne Schichtaufnahmen sind sehr genaue Aussagen über die Kiefergelenksanatomie möglich.

Die vorliegende Ausführung der Erfindung vereinfacht die instrumentelle Funktionsanalyse erheblich durch folgende Merkmale:

Der Patient muß nicht zwingend bestimmte Bewegungen ausführen. Es reicht in der Regel aus, wenn der Patient irgendwelche Bewegungen macht. Genaue Bewegungen sind nicht erforderlich, erhöhen aber die Genauigkeit.

Der Bediener muß aufgrund der Einfachheit der Bedienung keine besonderen Kenntnisse haben. Eine einfache Einweisung genügt zur fehlerfreien Bedienung. Das erfindungsgemäße Programm ist selbsttätig in der Lage, die erfaßten Daten auf deren Qualität hin zu überprüfen. Der Bediener während der Datenerfassung muß nicht mit dem Anwender der gewonnenen Daten übereinstimmen, da jeder, der die Daten auswertet, den Ursprung auf Fehlerhaftigkeit überprüfen kann. Die Datenerfassung ist daher auf Praxispersonal delegierbar.

Es werden nur sehr leichte, für den Patienten kaum störende Gegenstände, oder keine am Patienten montiert. Die Datenerfassung erfolgt optisch aus einem für den Patienten angenehmen Abstand.

Die Daten zur kondylenachspositionsgerechten Modellmontage werden nicht mechanisch, wie bisher, an das Labor übertragen, sondern lediglich in Form von Daten. Das einzige mechanische Teil, das für den Informationstransport notwendig ist, ist z.B. eine Bißgabel mit Zahnimpressionen oder ein anderes einfaches Übertragungshilfsmittel.

Es kann auch auf jegliches mechanische Registrat verzichtet werden. Die kann erfolgen durch Erfassung/Scannen der dreidimensionalen Zahnkonturen oder wenigstens drei markanter Punkte an den Zähnen unmittelbar im Mund durch Einsatz entsprechender Kameratechnik, wobei die so erfasste dreidimensionale Kontur oder markanten Punkte mit einem Referenzsystem, z.B. die Referenzmarkierungen am Oberkiefer/Kopf, in mathematisch darstellbarer räumlicher Relation gesetzt wird, da beispielsweise die Position der scannenden Kamera bekannt ist. Die so erfassten Daten können dann genutzt werden, um die Kiefermodelle im Artikulator unter Zuhilfenahme der erfindungsgemäßen Vorrichtung zur Modellmontage zu montieren, ohne dass ein mechanisches Registrat notwendig ist. Vorteil ist, dass an das zahntechnische Labor keine mechanischen Registrierhilfsmittel mehr übermittelt werden müssen, sondern sämtliche erforderliche Informationen nur noch in Form von Daten vorliegen. Bei diesem Vorgehen ist es dann erforderlich, dass entweder die Kiefermodelle aus Gips oder Kunststoff oder ähnlichem ebenfalls optisch gescannt werden müssen, um eine entsprechende Beziehung zu dem im Mund erfassten Bild der echten Zähne und dem Modell herstellen zu können oder alternativ, dass markante Punkte, wenigstens drei, an den Zähnen und ihre korrespondierenden Stellen an den Modellen angegeben oder optisch erfasst werden.

Optische Erfassung der Registrate als Negativform der Zahnimpressionen oder optische Erfassung wenigstens dreier markanter Punkte im Registrat und, ähnlich wie vorhergehend beschrieben, rechnerisch Herstellen eines Bezuges zum im Artikulator zu montierenden Modell, welches dann unter Zuhilfenahme der erfindungsgemäßen Vorrichtung zur Modellmontage im Artikulators montiert wird.

Man ist in der Lage, den genauen Interkondylarabstand zu messen, die Kondylenachse und die genaue Kondylenlokalisation auf der Achse, die durch die beiden Kondylen geht, zu bestimmen.

Kiefergelenkspositionen und Kieferstellungen können vom Programm simuliert werden, so daß Zentrikregistrate und Stützstift-, bzw. Pfeilwinkelaufzeichnungen und genaue Bestimmungen der Vertikalrelation mit Wachswällen oder anderen Hilfsmitteln nicht mehr benötigt werden. Das System ist in der Lage, die zentrische Kondylenposition virtuell zu bestimmen. Die Herstellung von beispielsweise totalem Ersatz wird erheblich vereinfacht. Gerade in der Implantatprothetik ist hohe funktionale Genauigkeit der Gestaltung des Zahnersatzes außerordentlich wichtig. In der virtuellen Bestimmbarkeit der zentrischen Kiefergelenksposition und der damit verbundenen Ersparnis eines Zentrikregistrats oder einer Stützstift-/Pfeilwinkelaufzeichnung liegt ein erheblicher Vorteil.

Gerade im virtuellen Bereich ergeben sich vorteilhafte Wirkungen bei der Erstellung von Zahn(teil)ersatz, z.B. bei der CEREC-Technik.

Bei dieser Technik ist es bekannt, einen Zahnersatz direkt bei der Behandlung des Patienten oder nach Modellherstellung durch Fräsen eines Materialblocks herzustellen. Hierbei muß der behandelnde Zahnarzt oder der Zahntechniker jedoch die Kaufläche des zu präparierenden Zahnes im wesentlichen selbst modellieren.

Wie vorerwähnt wird die Möglichkeit gegeben die genaue Position der Kiefer eines Patienten auszumessen. Ebenso kann zumindest der zu präparierende Zahn und ein gegenüberliegender Zahn(bereich) optisch erfasst werden, ggf. jeweils die gesamten Zähne eines Kiefers um eine (z.B. dreidimensionale) Bildinformation über die Zähne zu erhalten. So kann der Kiefer eines Patienten vollständig oder zumindest zum Teil virtuell auf einem Rechnersystem simuliert werden, wobei Informationen über die konkreten beim Patienten gegebenen Kauflächen und deren Anordnung zueinander, insbesondere auch bei einer Kieferbewegung vorliegen.

Aufgrund der bestehenden Kieferdaten kann so eine Gegenüberstellung des zu präparierenden Zahnes mit einem gegenüberliegenden Zahn(bereich) mit höchster Genauigkeit simuliert werden, um feststellen zu können, wie die Kaufläche des zu präparierenden Zahnes geformt werden muss, damit sich diese beim Kauen in die vorhandene Kaufläche des gegenüberliegenden Zahnes einfügt. Es können so bei der an sich bekannten insitu-Fräsung eines Inlays auch gleich optimal angepasste Kauflächen am Zahn(teil)ersatz erstellt werden. So können die üblichen Nacharbeiten nach Erstellung einer CEREC-Füllung entfallen oder zumindest erheblich vereinfacht werden. Diese Anwendung ist nicht auf die Erstellung von Zahnersatz durch das bekannte CEREC-System beschränkt, sondern bietet sich genauso an, wenn der Zahnersatz in üblicher Weise laborgestützt erstellt wird. In jedem Fall können gnathologisch korrekt gestaltete Kauflächen erstellt werden, da das System in der Lage ist ein virtuelles Modell eines Zahnes oder Kiefersegmentes oder gesamten Kiefers in Beziehung zu setzen zu einem virtuellen Artikulator, so dass die ermittelten Kondylenpositionen bzw. kinematischen Zentren der Kondylen und die Kiefergelenksbahnen genutzt werden können.

Ein ähnliches Verfahren kann in vielen Bereichen der Technik und Medizin zur Navigation, Positionsbestimmung und Positionierung im zwei- oder dreidimensionalen Raum sowie zur Aufzeichnung und Auswertung von Bewegungen genutzt werden, beispielsweise in allen zum Stand der Technik genannten Gebieten. Bevorzugter Einsatz findet sich auf dem Gebiet von Fahrzeugen z.B. Schleppfahrzeugen bei Flugzeugen, die ein Bugrad eines Flugzeuges sicher fassen müssen oder bei Fahrzeugen, z.B. Abraumbaggern über und unter Tage.

Beispielsweise kann auch die Position von Fahrzeugen zu einem Bezugspunkt bestimmt werden. Z.B. kann hierfür an Fahrzeugen wenigstens eine optische Hilfsstruktur angeordnet sein. In der Umgebung können eine oder mehrere Kameras angeordnet sein, die wenigstens ein Fahrzeug aufnehmen, bzw. die Hilfsstruktur/en. Die Position und insbesondere auch die Ausrichtung der wenigstens einen Kamera sind bekannt und stellen die Referenzposition dar. Es kann so durch Aufnahme der Bilder und Auswertung gemäß dem vorbeschriebenen Verfahren die Position des Fahrzeugs bestimmt werden.

Alternativ kann eine Referenzposition auch durch einen anderen markanten Punkt gegeben sein und nicht durch die Kamera. Z.B. können im Raum, bzw. der Umgebung des Fahrzeuges wenigstens eine weitere optische Hilfsstruktur angeordnet sein, die die bekannte Referenzposition darstellt. Dann braucht die Kameraposition nicht bekannt zu sein.

Alternativ kann auch wenigstens eine Kamera an einem Fahrzeug angeordnet und mit dem Fahrzeug mitbewegt sein. In der Umgebung des Fahrzeuges können dann optische Hilfsstrukturen angeordnet sein und durch die Kamera als Referenz kann die Position zur Hilfsstruktur ermittelt werden. Ein Fahrzeug kann so einen bestimmten Weg relativ zur optischen Hilfsstruktur auffinden und ggfs. auf einem solchen Weg gesteuert werden.

Aufgrund der Positionsbestimmung kann entweder ein Fahrer automatisch angewiesen werden das Fahrzeug zu steuern, z.B. um ein Ziel anzufahren, oder das Fahrzeug kann automatisch navigiert werden, um das Ziel zu erreichen. Hierbei kann das Ziel z.B. auch durch eine optische Hilfsstruktur der vorgenannte Art oder z.B. durch ein projiziertes Bild definiert sein.

Anwendungen finden sich z.B. unter Tage bei der Steuerung von Abraumbaggern, die einen Abraumhaufen als Ziel ansteuern sollen. An einer Tunnel- bzw. Stollendecke können z.B. optische Hilfsstrukturen und auf dem Bagger wenigstens eine Kamera angeordnet sein oder umgekehrt. Auch Flugzeugschlepper, die zum Schleppen eines Flugzeuges an ein Bugrad ankoppeln, können so genau auf das Bugrad zugefahren werden. Hierfür hat z.B. ein Bugrad ein optische Hilfsstruktur, die auch an die Fahrwerkskonstruktion aufgeklebt sein kann, z.B. durch Kreisflächen, was hier unproblematisch ist, da normalerweise ein Bugrad aus einer definierten Richtung angefahren wird und somit nicht zwingend Kugeln nötig sind. Das Bugrad selbst oder die Fahrwerkskonstruktion kann selbst eine optische Hilfsstruktur darstellen, so dass keine zusätzliche angebracht werden muss.

Bei allen Möglichkeiten kann die Software auf einem Datenträger im Fahrzeug oder aber außerhalb des Fahrzeugs lokalisiert sein. Gegebenenfalls erfolgt die Datenübertragung über Funkwellen. Infrarotwellen, Lichtleiter oder Kabel. Das Fahrzeug wird von der Software auf einem Datenträger in einem Computer gesteuert.

In einer weiteren Ausbildung kann die Software den gefahrenen Weg speichern. Diese Funktion kann beispielsweise dazu genutzt werden, daß zunächst eine Person das Fahrzeug entlang des später automatisch zu fahrenden Weges lenkt und die Software diesen Weg speichert. Später kann dann das Fahrzeug unbemannt diesen Weg, gesteuert vom vorliegenden Navigationssystem, nachfahren. Vorteil ist gegenüber anderen Lösungen, daß Hindernisse und Wegbegrenzungen nicht aufwändig während der Fahrt gescannt oder anderweitig abgetastet werden müssen.

Bezogen auf die vorgenannte Ausführung kann oberhalb eines Abraumhaufens mit Abraummaterial eine Kamera und ein Projektor angebracht sein. Der Projektor projiziert ein Muster, beispielsweise ein Streifenmuster, auf den Abraumhaufen. Die Kamera erfaßt das auf den Abraumhaufen projizierte Bild. Kamera und Projektor werden so positioniert, daß der zu bearbeitende Teil des Abraumhaufens erfaßt wird. Gegebenenfalls können durch eine Positioniereinrichtung Kamera und Projektor an eine optimale Stelle positioniert werden. Eine derartige Positioniereinrichtung kann beispielsweise aus einem Gelenkarm oder einer Schienenführung bestehen.

Aufgrund der unterschiedlichen Entfernung des Abraummaterials zum Projektor erscheint das projizierte Muster verzerrt. Das von der Kamera erfaßte Bild wird von einer Software auf einem Datenträger ausgewertet. Anhand der Verzerrungen kann auf die Entfernungen der Oberflächenabschnitte des Haufens rechnerisch rückgeschlossen werden.

Gegebenenfalls können die Positionsinformationen des Baggers und die Informationen zur räumlichen Ausdehnung des Haufens, die die Software bestimmt haben, genutzt werden, um die Kamera sowie den Projektor optimal zu platzieren.

Die Informationen zur räumlichen Ausdehnung des Haufens können nun genutzt werden, die Position des Baggers optimal zu steuern, um eine maximale Abräumeffektivität zu erzielen. In einer entsprechenden Ausführung kann der Bagger also selbsttätig, gesteuert von der Software auf einem Datenträger, eine optimale Abraumposition in Relation zum Abraumhaufen einnehmen und mit der Baggerschaufel in den Abraumhaufen hineinfahren und eine entsprechende Menge aufnehmen.

Analog funktioniert diese Technologie auch mit anderen Abraumfahrzeugen und Methoden (Förderbänder, rotierende Abraumschaufeln, etc.).

Bei allen Konstruktionen ist aufgrund der besonderen Software nur eine einzige Kamera ausreichend, um die räumlichen Informationen zu bestimmen, es werden also nicht mehrere Kameras benötigt. Falls nicht der gesamte zu beobachtende Bereich von dem Blickfeld einer Kamera erfaßt wird, kann durch positionierbare, rotierbare, kippbare Kameras oder durch Einsatz von mehr als nur einer Kamera die Datenerfassung gesichert werden. Falls lediglich zur Sicherheit eine Redundanz der Daten gewünscht wird, können ebenfalls mehrere Kameras sinnvoll sein. Beispielsweise bei Einsatz in sehr schmutzbelasteten Bereichen kann durch Verschmutzung der Kameraoptik unter Umständen eine einwandfreie Bilderfassung nicht immer garantiert werden. Redundante Kameras würden in solchen Fällen weiterhin die Funktion sichern.

Die Abmessungen des Arbeitsraumes der Abraumgeräte sind entweder auf einer elektronischen Karte, die in Bezug zu den entsprechenden Referenzpunkten, gebildet aus optischen Markierungen oder der Kamerapositionen, gesetzt wird gespeichert oder die Software erhält die Informationen zur Raumbegrenzung über an den Abraumgeräten angebrachte elektronische Abstandssensoren, beispielsweise Ultraschallsender und -Empfänger, die über Laufzeitmessungen von Ultraschallsignalen die Distanz zum gegenüberliegenden Objekt messen. Auch Laserscanner-Systeme können alternativ verwendet werden, bei denen über Laufzeitmessung der Lichtsignale die Distanz bestimmt wird.

Komplizierte oder nicht eindeutige Formen der Körper, deren Positionen bestimmt werden sollen, erfordern optische Hilfsmarkierungen. Die optischen Markierungen können entweder durch eingebrachte Leuchtmittel selbst leuchten oder werden von einer externen Lichtquelle beleuchtet. Um eine einwandfreie Zuordnung der Markierungen zu ermöglichen, können diese auch in unterschiedlichen Farben ausgeführt sein.

Bei einfachen oder eindeutigen Formen der Körper, deren Positionen bestimmt werden sollen, kann auf zusätzliche Markierungen verzichtet werden. Die Umrisskontur des Körpers, dessen Position bestimmt werden soll, kann in solchen Fällen selbst als zu erkennende Form genutzt werden.

Weitere Anwendungsmöglichkeiten sind Steuerung/Navigation von Gabelstaplern oder anderen Fahrzeugen in Lagerhallen, von Weltraumfahrzeugen, Spielwaren, beispielsweise ferngesteuerte Modellfahrzeuge, Messung des Winkels zwischen Flugzeugschlepper und Flugzeug, wobei das Softwareprogramm über eine am Flugzeugschlepper angebrachte Kamera am Flugzeug angebrachte Markierungen oder die Umrisskontur des Flugzeugkörpers selbst erfasst. Anhand der durch die Software durchgeführten Bildauswertung kann der Winkel bestimmt werden.

Im Folgenden wird eine Ausführung der Erfindung im zahnmedizinischen Bereich beschrieben. Diese beschriebene Ausführung ist Teil der Erfindung.

Sie betrifft ein System zur optischen Aufzeichnung der Unterkieferbewegungen mit Auswertung der Daten zur Einstellung von Artikulatoren und zur automatisierten Funktionsanalyse.

Die Ausführung der Erfindung betrifft die instrumentelle Funktionsanalyse zur Ermittlung von Daten, die einerseits die patientengerechte Einstellung von Artikulatoren im zahntechnischen Labor und andererseits Entscheidungen des Benutzers bezüglich einer Diagnose und eventueller Therapie ermöglichen.

Anhand der Zeichnungen wird die Erfindung im folgenden näher erläutert. Es zeigen:

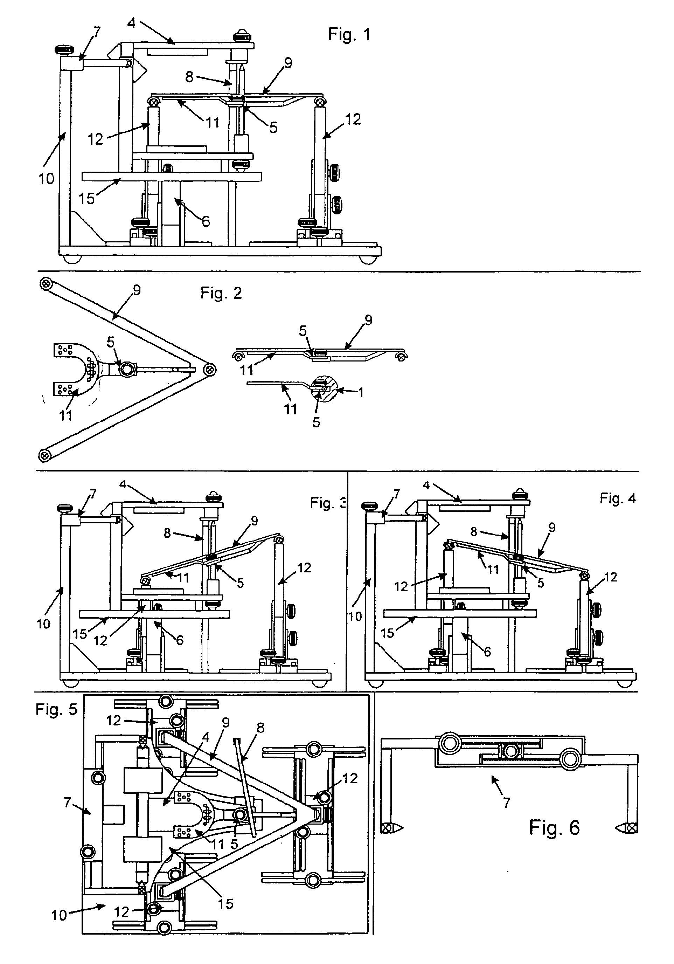

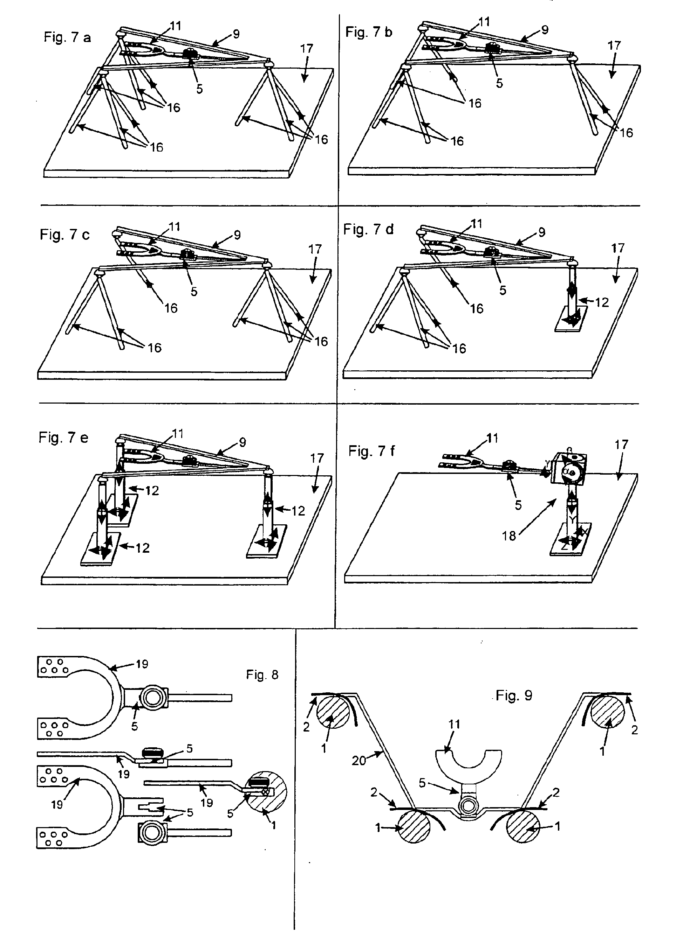

- Fig. 1: eine vorteilhafte Ausgestaltung der erfindungsgemäßen Vorrichtung zur Montage der Kiefermodelle im Artikulator (hier Montagetisch genannt) in der Seitenansicht, Justierungen in Grundstellung, ein Artikulator ist beispielhaft schematisch eingezeichnet, entspricht der Abbildung Fig. 7e,
- Fig. 2: eine Detailansicht einer vorteilhaften Ausgestaltung der erfindungsgemäßen Vorrichtung zur Montage der Kiefermodelle im Artikulator (hier Montagetisch genannt) von oben, hier eine vorteilhafte Konstruktion der auf den einstellbaren Stützen aufliegenden Ebene, die ein Kupplungselement zur Befestigung der Übertragungshilfsmittel enthält (Montagedreieck),
- Fig. 3: eine vorteilhafte Ausgestaltung der erfindungsgemäßen Vorrichtung zur Montage der Kiefermodelle im Artikulator (hier Montagetisch genannt) in der Seitenansicht, Justierungen so eingestellt, daß das Übertragungshilfsmittel nach hinten unten und vorne oben geneigt ist, ein Artikulator ist beispielhaft schematisch eingezeichnet, entspricht der Abbildung Fig. 7e,
- Fig. 4: eine vorteilhafte Ausgestaltung der erfindungsgemäßen Vorrichtung zur Montage der Kiefermodelle im Artikulator (hier Montagetisch genannt) in der Seitenansicht, Justierungen so eingestellt, daß das Übertragungshilfsmittel nach hinten oben und vorne unten geneigt ist, ein Artikulator ist beispielhaft schematisch eingezeichnet, entspricht der Abbildung Fig. 7e,
- Fig. 5: eine vorteilhafte Ausgestaltung der erfindungsgemäßen Vorrichtung zur Montage der Kiefermodelle im Artikulator (hier Montagetisch genannt) in der Ansicht von oben, Justierungen in Grundstellung, mit Parallelisierungshilfe (8) nach Patentanspruch 32, mit Zentriereinrichtung (7) nach Patentanspruch 31, ein Artikulator (4) ist beispielhaft schematisch eingezeichnet, entspricht der Abbildung Fig. 7e,
- Fig. 6: eine Detailansicht einer vorteilhaften Ausgestaltung der erfindungsgemäßen Vorrichtung zur Montage der Kiefermodelle im Artikulator (hier Montagetisch genannt) von oben, hier eine vorteilhafte Konstruktion der Zentriereinheit für den Artikulator,
- Fig. 7 a bis f: einige vorteilhafte Konstruktionen der erfindungsgemäßen Vorrichtung zur Montage der Kiefermodelle im Artikulator (hier Montagetisch genannt) in schematischen Darstellungen, hier jeweils auszugsweise Detailansichten der Positionierungsvorrichtung für die Übertragungshilfsmittel (innerhalb der Klammern am jeweiligen Absatzende werden mit Ziffern die Gruppierungen schematisch dargestellt),
- Fig. 7 a: eine vorteilhafte Konstruktion der erfindungsgemäßen Vorrichtung zur Montage der Kiefermodelle im Artikulator (hier Montagetisch genannt) in schematischer Darstellung mit neun in der Länge einstellbaren Stützen (3-3-3),
- Fig. 7 b: eine vorteilhafte Konstruktion der erfindungsgemäßen Vorrichtung zur Montage der Kiefermodelle im Artikulator (hier Montagetisch genannt) in schematischer Darstellung mit sechs in der Länge einstellbaren Stützen (2-2-2),
- Fig. 7 c: eine vorteilhafte Konstruktion der erfindungsgemäßen Vorrichtung zur Montage der Kiefermodelle im Artikulator (hier Montagetisch genannt) in schematischer Darstellung mit sechs in der Länge einstellbaren Stützen (3-2-1),
- Fig. 7 d: eine vorteilhafte Konstruktion der erfindungsgemäßen Vorrichtung zur Montage der Kiefermodelle im Artikulator (hier Montagetisch genannt) in schematischer Darstellung mit vier in der Länge einstellbaren Stützen (3-1) und einer linear in x-, y- und z-Richtung einstellbaren Positioniereinheit,
- Fig. 7 e: eine vorteilhafte Konstruktion der erfindungsgemäßen Vorrichtung zur Montage der Kiefermodelle im Artikulator (hier Montagetisch genannt) in schematischer Darstellung mit drei linear in x-, y- und z-Richtung einstellbaren Positioniereinheiten,
- Fig. 7 f: eine vorteilhafte Konstruktion der erfindungsgemäßen Vorrichtung zur Montage der Kiefermodelle im Artikulator (hier Montagetisch genannt) in schematischer Darstellung mit einer linear in x-, y- und z-Richtung einstellbaren Positioniereinheit in Kombination mit Rotationsmöglichkeit um x-, y-, und z- Achse (Winkel alpha α, beta β, gamma γ),
- Fig. 8: eine Detailzeichnung eines Übertragungshilfsmittels, hier eine Bißgabel mit Frontaussparung,
- Fig. 9: eine vorteilhafte Konstruktion des Gesichtsbogens für den Unterkiefer mit vier Kugeln als optische Hilfsstrukturen (1) und kontraststeigernden Hintergründen (2) in schematischer Darstellung in Aufsicht,
- Fig. 10: eine vorteilhafte Konstruktion des Gesichtsbogens für die Montage am Kopf des Patienten mit vier Kugeln als optische Hilfsstrukturen (1), kontraststeigernden Hintergründen (2) und einer vorteilhaften Kopfbefestigung am Patienten in Form eines Bandes mit Klettverschluss (3) in schematischer Darstellung in Aufsicht,
- Fig. 11: eine vorteilhafte Konstruktion des Gesichtsbogens für die Montage am Kopf des Patienten und des Gesichtsbogens für den Unterkiefer mit jeweils vier Kugeln als optische Hilfsstrukturen in schematischer Darstellung, am Patienten befestigt, in Frontansicht,
- Fig. 12: eine vorteilhafte Konstruktion des Gesichtsbogens für die Montage am Kopf des Patienten und des Gesichtsbogens für den Unterkiefer mit jeweils vier Kugeln als optische Hilfsstrukturen in schematischer Darstellung, am Patienten befestigt, in Seitenansicht.

Die Abbildungen sind nicht maßstabsgerecht und entsprechen einer von vielen möglichen vorteilhaften Ausgestaltungen der Erfindung und dienen nur dem besseren Verständnis.

Die vorliegende Ausführung der Erfindung erhält durch optische Erfassung die für die Bestimmung der Kondylenlokalisationen und Bewegungen notwendigen Daten, wertet diese Daten durch das erfindungsgemäße Programm aus und ermöglicht die Übertragung der Ergebnisse in Form von Daten an das zahntechnische Labor. Die Kiefermodelle werden im Artikulator unter Anwendung einer erfindungsgemäßen Vorrichtung zur Montage der Kiefermodelle im Artikulator (hier auch Montagetisch genannt), die auf die durch das Programm bestimmten Werte eingestellt wird, montiert.

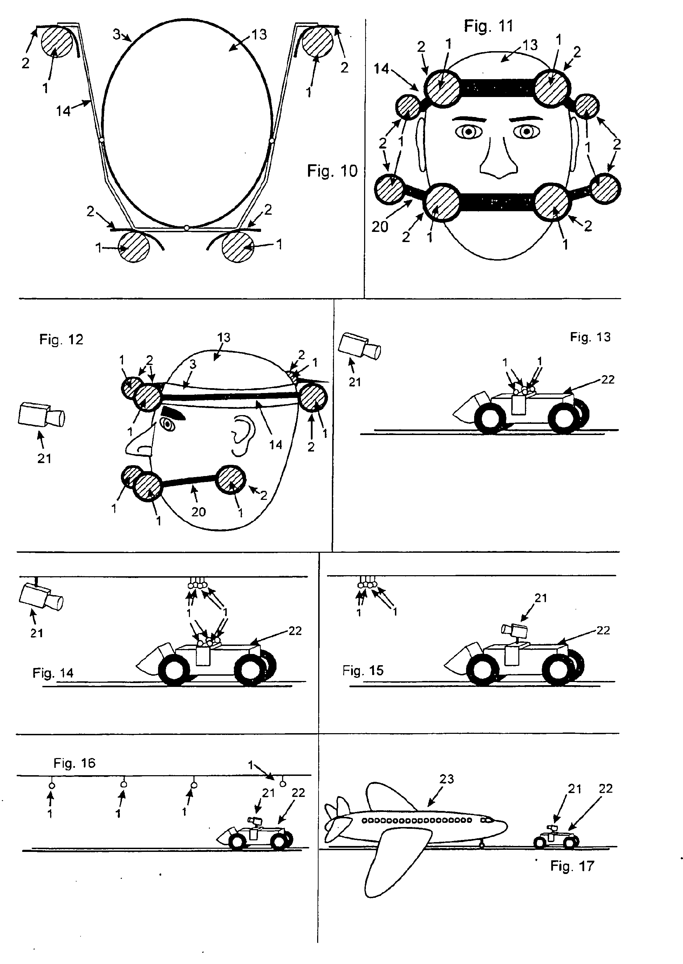

Gemäß Figuren 10 bis 12 werden am Kopf des Patienten 13 Übertragungshilfsmittel z.B. in Form einer Bissgabel 11 mit erfindungsgemäßen optischen Hilfsstrukturen 1 (z.B. Kugeln), z.B. an Gesichtsbögen 13/20 angebracht und optisch von einer Kamera 21 erfaßt, wobei Figur 9 einen Unterkiefergesichtsbogen 20 darstellt, der sich bei einer Kieferbewegung gegenüber dem Oberkiefergesichtsbogen 14 bewegt, der ein Referenzsystem darstellt. Erkennbar ist das der Gesichtsbogen 20 über ein Kupplungselement 5 mit der Bissgabel 11 verbunden ist. Ebenfalls sind hier kontraststeigernde Hintergründe 2 hinter den Hilfsstrukturen 1 angeordnet. Eine mögliche erfindungsgemäße Bissgabel 19 mit einer Frontzahnausnehmung ist in der Figur 8 dargestellt. Sie ermöglicht, dass in der Schlussstellung der Zähne keine oder nur eine unwesentliche Bisssperrung durch die Bißgabel 19 hervorgerufen wird, da die Frontzähne durch die Ausnehmung hindurchgehen und die Bissgabel 19 nur im Backenzahnbereich an den Zähnen anliegt.

Die Bilder der willkürlichen oder vorgegebenen Kieferbewegungen werden in Form von Einzelbildern oder Videofilmen aufgezeichnet. Ein erfindungsgemäßes Programm berechnet gemäß dem vorbeschriebenen Verfahren die Kieferpositionen und Kieferbewegungen und bestimmt so die erforderlichen Daten, z.B. Lage der Kondylen.

Die so erhaltenen Daten zur kondylenachspositionsgerechten Modellmontage werden nicht mechanisch, wie in allen bekannten Systemen, an das Labor übertragen, sondern lediglich in Form von Daten. Das einzige mechanische Teil, das für den Informationstransport notwendig ist, ist eine Bißgabel 11/19 mit Zahnimpressionen oder ein anderes einfaches Übertragungshilfsmittel. Diese Übertragungshilfsmittel können Bißgabeln mit aufgebrachtem thermoplastischem oder autopolymerisierendem Material, welches Zahnimpressionen des Oberkiefers oder des Unterkiefers oder beide zusammen enthält, oder Kieferschablonen bei stark reduziertem Zahnbestand oder Zahnlosigkeit des Kiefers, je nach klinischer Patientensituation, sein.

Diese Ausführung der Erfindung besteht aus folgenden erfindungsgemäßen Teilen:

Kamera, Computer mit erfindungsgemäßem Programm, Stirn-Gesichtsbogen (Fig. 10) mit optischen Hilfsstrukturen, Unterkiefer-Gesichtsbogen (Fig. 9) mit optischen Hilfsstrukturen, eine erfindungsgemäße Vorrichtung zur Montage der Kiefermodelle im Artikulator (hier Montagetisch genannt), Übertragungshilfsmittel: Bißgabel, Löffel, Schablonen und andere Hilfsmittel zur Übertragung der Oberkieferposition oder Unterkieferposition auf den Gesichtsbogen und zur Befestigung des Gesichtsbogens am Unterkiefer.

Zur Erfassung der Kieferbewegungen können die benutzten Übertragungshilfsmittel, insbesondere individuell hergestellte Schablonen oder Löffel bei reduziertem Zahnbestand oder zahnlosem Kiefer, mit einem Stützstift zwischen Ober- und Unterkiefer fixiert werden. Der Stützstift wird mittels geeigneter Hilfsmittel (Schablonen oder das für den Oberkiefer eingesetzte Übertragungshilfsmittel) am Oberkiefer befestigt. Der Stützstift stützt sich auf einer Platte, die im Unterkiefer angebracht wird, auf. Bei Durchführung der Bewegungen beißt der Patient immer auf den Stützstift. Aufgrund einer stabilen Dreipunktabstützung bleibt das Übertragungshilfsmittel des Unterkiefers auf seiner Position liegen. Die drei Stützpunkte sind die beiden Kiefergelenke und die Auflage des Stützstiftes auf der im Unterkiefer angebrachten Platte. Die Spitze des Stützstiftes ist vorzugsweise kugelförmig. Der Stützstift kann auch mit dem Unterkiefer fixiert werden, so daß die Platte zur Abstützung der Spitze des Stützstiftes im Oberkiefer liegt.

Es kann auch auf jegliches mechanische Registrat verzichtet werden, indem die Kiefer optisch erfaßt werden und anhand dieser Daten die Kiefermodelle im Artikulator entsprechend der bestimmten Werte montiert werden.

Durch diesen Einsatz von optischen Kiefervermessungen kann auf mechanische Übertragungen gänzlich verzichtet werden. So kann bei diesem Verfahren auf die Weitergabe eines mechanischen Registrates an das zahntechnische Labor verzichtet werden. Bei diesem Verfahren werden die Kiefermodelle entsprechend der geometrischen Daten bestimmter Referenzpunkte, beispielsweise Höckerspitzen einzelner Zähne, in einer Vorrichtung zur Montage der Kiefermodelle im Artikulator am Artikulator montiert. Die hierzu benötigten Daten werden durch ein erfindungsgemäßes Programm berechnet.

Artikulator und Übertragungshilfsmittel werden im zahntechnischen Labor an einer Vorrichtung zur Montage der Kiefermodelle im Artikulator (Montagetisch) befestigt. Der Montagetisch 10, der in den Figuren 1,3,4 und 5 dargestellt ist, wird entsprechend der vom erfindungsgemäßem Programm ermittelten dreidimensionalen Daten eingestellt. Dies kann ggfs auch automatisch erfolgen, sofern der Montagetisch automatisch, z.B. elektrisch ansteuerbare Aktoren aufweist, deren Position durch die berechneten Werte einstellbar ist.

Für die Positionierung des Übertragungshilfsmittels 11/19 sind z.B. die Verschiebungen entsprechender Stützen 16 möglich, die sich am jeweiligen oberen Ende in einem Stützpunkt treffen, der so in alle Raumrichtungen (x-, y- und z- Richtung) einstellbar ist, wobei je nach Ausführung gegebenenfalls auch Rotationen um alle Raumachsen (um x-, y- und z-Achse, Winkel alpha α, beta β, gamma γ) möglich sind, wie es Figur 7f zeigt.

Erkennbar ist in den Figuren 7a bis 7f, dass die auf einer Grundplatte 17 angeordneten Stützen 16 oder Verschiebetische 12 vorgesehen sind, um einen Montageträger 9 gemäß der Figur 2, an dem über eine Kupplung 5 eine Bißgabel 11/19 angebracht ist entsprechend der berechneten Werte auszurichten. So kann ein in der Bissgabel 11 angeordnetes Kiefermodell gegenüber einen Artikulator 4 einjustiert werden, wobei die Figuren 1,2,3,4 und 5 zeigen, wie der Träger 9 in der Artikulatoranordnung einjustiert ist.

Nach der Justage wird das zu diesen Einstellungen gehörige Kiefermodell im Artikulator montiert. Dieser Vorgang kann für einen Patientenfall je nach Situation mehrfach nötig sein.

Im Regelfall kommen folgende Methoden in Betracht: Montage des Oberkiefers oder des Unterkiefers anhand eines Übertragungshilfsmittels 11/19 (Schablone oder Bißgabel) und anschließender Montage des Gegenkiefers anhand eines Registrates oder anhand eines weiteren neu am Montagetisch befestigten und eingestellten Übertragungshilfsmittels (Schablone oder Bißgabel) oder Montage des Oberkiefers und des Unterkiefers anhand nur eines Übertragungshilfsmittels (Schablone oder Bißgabel).

Teile dieser Erfindung können auch in Verbindung mit bereits bekannten Verfahren und Vorrichtungen benutzt werden. So können beispielsweise Daten aus anderen Positionsmeßsystemen zur Verwendung im erfindungsgemäßen Programm weiterverarbeitet werden.

Ebenso ist möglich, daß die gelenkbezügliche Kieferpositionsbestimmung mit herkömmlichen Gesichtsbogenregistrierungen durchgeführt wird und auch die Modellmontage im Artikulator auf bekannte Weise erfolgt, jedoch die Kondylenbahnaufzeichnung mit erfindungsgemäßen Vorrichtungen und Verfahren stattfindet. Diese erfindungsgemäße Kondylenbahnaufzeichnung ermöglicht eine individuelle Justierung des Artikulators somit auch dann, wenn die Gesichtsbogenregistrierung und die Kiefermodellmontage auf bekannte Weise erfolgt. Mögliche vorteilhafte Ausgestaltungen dieser Erfindung, die dieses Vorgehen ermöglichen sind Anbauteile, die an einem bekannten Gesichtsbogen befestigt werden, enthalten optische Hilfsstrukturen oder es wird bei der optischen Bewegungsaufzeichnung ein Gesichtsbogen verwendet, der auf identische Weise an den gleichen anatomischen Bezugspunkten am Patienten befestigt wird, wie der bekannte Gesichtsbogen.

Somit ist bei der optischen Bewegungsaufzeichnung gewährleistet, daß das identische Bezugssystem verwendet wird, wie bei der mechanischen Registrierung. Die erfindungsgemäße Software auf einem Datenträger ist somit in der Lage, Artikulatoreinstellungen zu berechnen, die zur mechanisch registrierten Situation passen.

Die Figuren 1 und 3 bis 5 zeigen weiterhin noch Parallelisierungshilfen 8 und Zentriereinrichtung 7 gemäß Figur 6, um eine einfachere Justage des Artikulators durchführen zu können.

Die Figuren 13 bis 16 zeigen die weitere Anwendung bei der Positionierung von Fahrzeugen, z.B. Unter-Tage-Baggern.

Gemäß Figur 13 kann das Fahrzeug 22 optische Hilfsstrukturen 1 tragen, um so mit einer Kamera 21, die z.B. an einer Tunneldecke angeordnet sein kann und als Referenzposition dient, erfasst zu werden, so ist die Position des Fahrzeuges bestimmbar.

Alternativ zeigt Figur 14, dass mit einer Kamera 21 sowohl optische Hilfsstrukturen 1 am Fahrzeug als auch gleichzeitig optische Hilfsstrukturen 1 an der Tunneldecke, die eine bekannte Referenzposition haben erfasst werden. So kann wiederum die Position des Fahrzeuges 22 bestimmt werden.

In Figur 15 ist eine Ausführung gezeigt, bei der das Fahrzeug 22 die Kamera trägt. Die Position gegenüber den Hilfsstrukturen 1 an der Tunneldecke kann so ermittelt werden.

Figur 16 zeigt ebenfalls eine Kamera am Fahrzeug 22, wobei entlang der Tunneldecke jeweils immer wieder in gewissen Abständen eine einzelne Hilfsstruktur 1 angeordnet ist. auch an nicht bekannten Positionen, beispielsweise nur jeweils eine Markierung an Tunneldecke oder Wand angebracht ist. Die Position der Markierung muß dann nicht bekannt sein, wenn beispielsweise die Markierungen immer in Tunnelmitte angebracht sind. Dann ist dem System bekannt, dass die Position immer mittig ist. Oder eine Anbringung seitlich wäre auch möglich, weil dem System dann auch bekannt ist, dass die Position immer seitlich ist. Das Fahrzeug kann dann von Markierung zu Markierung fahren, wobei sinnvoll ist, dass immer wenigstens eine Markierung im Blickfeld der Kamera ist. Die Verfahrenstechnik der Positionsbestimmung nach den folgenden Ansprüchen bleibt aber die gleiche. Bei größerer Positionierungsgenauigkeit kann dann mit mehreren Markierungen gearbeitet werden, die in bekannter räumlicher Relation stehen.

Die Figur 17 zeigt eine Anwendung bei Schleppfahrzeugen 22 für Flugzeuge 23, wobei sich die Schleppfahrzeuge am Bugrad des Flugzeuges einklinken. Um das Bugrad positionsgenau anfahren zu können wird mit der Kamera 21 auf dem Fahrzeug das Bugrad erfasst, welches selbst eine optische Hilfsstruktur darstellt oder welches ergänzend wenigstens eine Hilfsstruktur trägt. So kann das Fahrzeug seine genaue Position gegenüber dem Bugrad ermitteln und dieses Bugrad anfahren. Eine andere Anwendung bei Schleppfahrzeugen ist die Messung des Winkels zwischen Flugzeug und Schleppfahrzeug während der Fahrt um z.B. ungünstige Winkel zu vermeiden oder die notwendige Winkelinformation bei Navigation des Schleppfahrzeuges zu erhalten.

### Bezugszeichenliste:

| | |
|---|---|
| optische Hilfsstrukturen | 1 |
| kontraststeigernde Hintergründe | 2 |
| Band mit Klettverschluß | 3 |
| Artikulator | 4 |
| Kupplungselement | 5 |
| Höhenjustierung der Artikulatorstandebene (s. Anspruch 31) | 6 |
| Zentriereinrichtung (s. Anspruch 31) | 7 |
| Parallelisierungshilfe (s. Anspruch 32) | 8 |
| Montagedreieck | 9 |
| Vorrichtung zur Modellmontage (Montagetisch) | 10 |
| Bißgabel oder ein anderes Übertragungshilfsmittel | 11 |
| X-Y-Z-Verschiebetisch mit Gelenkauflage | 12 |
| Kopf des Patienten | 13 |
| Gesichtsbogen: Referenzbogen Oberkiefer/Kopf | 14 |
| Artikulatorstandebene | 15 |
| In der Länge einstellbare Stützen, Linearaktoren | 16 |
| Montagetisch, Detail (hier z.B. Grundplatte) | 17 |
| Positionierungseinrichtung, die eine linear in x-, y- und z-Richtung einstellbare Positioniereinheit umfasst und diese Positioniereinheit die Justierung einer Rotationseinheit ermöglicht, welche Rotationen um drei Raumachsen gestattet | 18 |
| Bißgabel mit Frontaussparung | 19 |
| Gesichtsbogen: Unterkiefer | 20 |
| Kamera | 21 |
| Fahrzeug, z.B. Abraumbagger oder Flugzeugschlepper | 22 |
| Flugzeug | 23 |

## Patentansprüche

1. Verfahren zur Positionsbestimmung der Kondylen des Unterkiefers einer Person (13), wobei mittels einer einzigen elektronischen Kamera (21) Bilder des Unterkiefers bei beliebigen Bewegungen des Unterkiefers durch die Person erfasst werden, wobei am Unterkiefer wenigstens eine optische Hilfsstruktur (1) mittels eines Gesichtsbogens (20) angeordnet ist und wobei Positionen des Unterkiefers relativ zu wenigstens einer gleichzeitig mit der Kamera (21) erfassten Referenzposition über eine Auswertung der Positionen der Hilfsstrukturen (1) in den erfassten Bildern mittels eines Computer programms bestimmt werden, wobei der Gesichtsbogen (14, 20) mit dem Unterkiefer mittels eines Übertragungshilfsmittels (11,19) verbunden wird, **gekennzeichnet dadurch, dass** das Übertragungshilfsmittel mit dem Gesichtsbogen mit einem eine reponierbare Montage ermöglichenden Kupplungselement verbunden wird, und dass mit dem Übertragungshilfsmittel eine Kieferposition an eine Vorrichtung zur Montage (17) eines Kiefermodells in einem Artikulator (4) mechanish übertragen wird.

2. Verfahren nach Anspruch 1, **dadurch gekennzeichnet, dass** eine Referenzposition durch den Oberkiefer gebildet wird, wobei am Oberkiefer oder anderen Kopfbereichen wenigstens eine optische Hilfsstruktur (1), insbesondere mittels wenigstens eines Gesichtsbogens (20) angeordnet wird.

3. Verfahren nach einem der vorhergehenden Ansprüche, **dadurch gekennzeichnet, daß** eine optische Hilfsstruktur (1) gebildet ist durch
a. eine Fläche bestimmter Farbigkeit und/oder
b. eine Reflexionsfläche und/oder
c. einen farbigen Körper und/oder
d. einen Reflexionskörper,
insbesondere einen Körper in Kugelform, insbesondere wobei bei einer Ausbildung von Hilfsstrukturen durch mehrere der vorgenannten Elemente die relativen Positionen der optischen Hilfsstrukturen untereinander und/oder zum zu vermessenden Gegenstand (13, 22, 23) bekannt sind.

4. Verfahren nach einem der vorhergehenden Ansprüche, **dadurch gekennzeichnet, daß** eine optische Hilfsstruktur (1) mit einem kontrasterhöhenden Hintergrund (2) versehen ist, insbesondere wobei ein Hintergrund zur Farbe der optischen Hilfsstruktur (1) einen Kontrast aufweist.

5. Verfahren nach einem der vorhergehenden Ansprüche, **dadurch gekennzeichnet, daß** die Elemente, insbesondere Kugeln, einer optischen Hilfsstruktur (1) in einer Ebene angeordnet sind, insbesondere wobei die Anordnung der Elemente in dieser Ebene trapezförmig ist, insbesondere wobei die aus Richtung der Kamera (21) betrachteten hinten liegenden Elemente einen größeren Abstand zueinander aufweisen als die vorne liegenden.

6. Verfahren nach einem der vorhergehenden Ansprüche, **dadurch gekennzeichnet, daß** aus den aufgenommenen Bildern mehrere Position des Unterkiefers zum Oberkiefer ermittelt werden, wobei aus den relativen Positionen die Lage der Kondylenachsen bestimmt werden.

7. Verfahren nach einem der vorhergehenden Ansprüche, **dadurch gekennzeichnet, daß** eine Vorrichtung zur Montage (17) wenigstens eines Kiefermodelles in einen Artikulator (4) eingesetzt wird, wobei die Kiefermodelle in der Vorrichtung relativ zum Artikulator (4) auch anhand von aus den Bildern gewonnenen Maßdaten, insbesondere Winkeln oder Längen, justiert werden, insbesondere wonach ein Kiefermodell fest mit dem Artikulator (4) verbunden wird.

8. Verfahren nach einem der vorherigen Ansprüche, **dadurch gekennzeichnet, dass** zur Erzielung einer Redundanz mehr als eine Kamera vorgesehen ist.

9. Positionsmeßsystem, das ausgebildet ist zur Durchführung eines Verfahrens nach einem der vorherigen Ansprüche

## Claims

1. Method for determining the position of the condyles of the lower jaw of a person (13), in which by means of a single electronic camera (21) pictures of the lower jaw are recorded during movements of the lower jaw by the person in any way whatsoever, in which at least one optical auxiliary structure (1) is arranged on the lower jaw by means of a face bow (20) and in which positions of the lower jaw in relation to at least one reference position recorded at the same time with the camera (21) are determined by analysing the positions of the auxiliary structures (1) in the pictures recorded by means of a computer programme, in which the face bow (14, 20) is connected to the lower jaw by means of a transfer appliance (11, 19), **characterised in that** the transfer appliance is connected to the face bow with a coupling element, which makes it possible to have a repositionable assembly, and that with the transfer appliance a jaw position is transferred mechanically to a device for the assembly (17) of a jaw model in an articulator (4).

2. Method according to claim 1, **characterised in that** a reference position is formed by the upper jaw, in which at least one optical auxiliary structure (1) is arranged on the upper jaw or other areas of the head, particularly by means of at least one face bow (20).

3. Method according to one of the previous claims, **characterised in that** an optical auxiliary structure (1) is formed by
a. an area of a certain colour and/or
b. a reflective area and/or
c. a coloured body and/or
d. a reflective body,
particularly a body in the shape of a sphere, particularly in which the relative positions of the optical auxiliary structures to each other and/or the object to be measured (13, 22, 23) are known through several of the elements indicated above, when auxiliary structures are formed.

4. Method according to one of the previous claims, **characterised in that** an optical auxiliary structure (1) is provided with a background (2), which increases contrast, particularly in which a background has a contrast in relation to the colour of the optical auxiliary structure (1).

5. Method according to one of the previous claims, **characterised in that** the elements, particularly spheres, of an optical auxiliary structure (1) are arranged in a plane, particularly in which the arrangement of the elements in this plane is in the shape of a trapezium, particularly in which the elements, which are behind, when considered from the direction of the camera (21), have a greater distance from each other than those, which are in front.

6. Method according to one of the previous claims, **characterised in that** several positions of the lower jaw to the upper jaw may be established from the pictures taken, in which the positions of the condyle axes may be determined from the relative positions.

7. Method according to one of the previous claims, **characterised in that** a device for the assembly (17) of at least one jaw model in an articulator (4) is used, in which the jaw models in the device are also adjusted in relation to the articulator (4) using dimensional data obtained from the pictures, particularly angles or lengths, particularly according to which a jaw model is connected firmly to the articulator (4).

8. Method according to one of the previous claims, **characterised in that** more than one camera is provided to obtain redundancy.

9. Position measurement system, which is made by carrying out a method according to one of the previous claims.

## Revendications

1. Procédé de détermination de la position des condyles de la mâchoire inférieure d'une personne (13), dans lequel au moyen d'une seule caméra électronique (21), des images de la mâchoire inférieure sont captées par la personne lors de mouvements quelconques de la mâchoire inférieure, au moins une structure auxiliaire optique (1) étant disposée sur la mâchoire inférieure au moyen d'un arc facial (20) et les positions de la mâchoire inférieure étant déterminées par rapport à au moins une position de référence saisie en même temps par la caméra (21) par une évaluation des positions des structures auxiliaires (1) dans les images saisies à l'aide d'un programme informatique, l'arc facial (14, 20) étant relié à la mâchoire inférieure par un auxiliaire de transmission (11, 19), **caractérisé en ce que** l'auxiliaire de transmission est relié à l'arc facial avec un élément de couplage permettant un montage repositionnable et **en ce que**, avec l'auxiliaire de transmission, une position de la mâchoire est transmise mécaniquement à un dispositif de montage (17) d'un modèle de mâchoire dans un articulateur (4).

2. Procédé selon la revendication 1, **caractérisé en ce qu'**une position de référence est formée par la mâchoire supérieure, au moins une structure optique auxiliaire (1) étant disposée sur la mâchoire supérieure ou d'autres régions de la tête, en particulier au moyen d'au moins un arc facial (20).

3. Procédé selon l'une des revendications précédentes, **caractérisé en ce qu'**une structure auxiliaire optique (1) est formée par
a. une surface d'une coloration déterminée, et/ou
b. une surface de réflexion et/ou
c. un corps coloré et/ou
d. un corps de réflexion,
en particulier un corps de forme sphérique, en particulier dans lequel, par la formation de structures auxiliaires par plusieurs des éléments précités, les positions relatives des structures auxiliaires optiques les unes par rapport aux autres et/ou par rapport à l'objet à mesurer (13, 22, 23) sont connues.

4. Procédé selon l'une des revendications précédentes, **caractérisé en ce qu'**une structure auxiliaire optique (1) est dotée d'un arrière-plan augmentant le contraste, en particulier dans lequel un arrière-plan présente un contraste par rapport à la couleur de la structure auxiliaire optique (1).

5. Procédé selon l'une des revendications précédentes, **caractérisé en ce que** les éléments, en particulier des billes, sont disposés sur un plan d'une structure auxiliaire optique (1), en particulier dans lequel la disposition des éléments dans ce plan est trapézoïdale, en particulier, les éléments se trouvant à l'arrière, considérés à partir du sens de la caméra (21), présentent un intervalle plus grand les uns par rapport aux autres, que ceux se trouvant à l'avant.

6. Procédé selon l'une des revendications précédentes, **caractérisé en ce qu'**à partir des images enregistrées, plusieurs positions de la mâchoire inférieure par rapport à la mâchoire supérieure sont déterminées, la position des axes de condyles étant déterminée à partir des positions relatives.

7. Procédé selon l'une des revendications précédentes, **caractérisé en ce qu'**un dispositif de montage (17) d'au moins un modèle de mâchoire est utilisé dans un articulateur (4), les modèles de mâchoire dans le dispositif par rapport à l'articulateur (4) étant ajustés également à partir des mesures obtenues des images en particulier des angles ou des longueurs, en particulier, un modèle de mâchoire étant relié fixement à l'articulateur (4) à partir de celles-ci.

8. Procédé selon l'une des revendications précédentes, **caractérisé en ce que**, pour obtenir une redondance, plusieurs caméras sont prévues.

9. Système de mesure de position qui est configuré pour réaliser un procédé selon l'une des revendications précédentes.
